# EUROPEAN PATENT SPECIFICATION

(11) **EP 1 381 040 B1**
(45) Date of publication and mention of the grant of the patent: **09.08.2006**
(21) Application number: 03254144.3
(22) Date of filing: 30.06.2003
(51) Int. Cl.: G11B 7/22, G11B 7/12

(54) **Optical pickup having optical base made of different kinds of materials**
Optisches Abtastgerät mit aus unterschiedlichen Materialien hergestelltem Unterbau
Tête de lecture optique avec base optique en matériaux différents

(30) Priority: 01.07.2002 JP 2002191958
(43) Date of publication of application: 14.01.2004
(73) Proprietor: Mitsumi Electric Co., Ltd., Tama-Shi, Tokyo (JP)
(72) Inventor: Hori, Ken'ichi, c/oMitsumi Electric Co., Ltd., Tama-shi, Tokyo (JP)
(74) Representative: Haley, Stephen

(56) References cited:
- EP-A- 1 148 482
- US-A- 5 600 619
- PATENT ABSTRACTS OF JAPAN vol. 2000, no. 06, 22 September 2000 (2000-09-22) & JP 2000 067457 A (SANKYO SEIKI MFG CO LTD), 3 March 2000 (2000-03-03)

## Description

The present application claims priority to prior Japanese application JP 2002-191958, the disclosure of which is incorporated herein by reference.

The present invention relates to an optical pickup that is movably mounted on a mounting object in an optical disk drive or the like.

Recently, optical disk drives are often installed in electronic devices such as personal computers. As recording media usable with the optical disk drives, CD-Rs (Compact Discs Recordable) and CD-RWs (Compact Discs Rewritable) are known. The CD-R is a recording medium that is writable, but not deletable. The CD-RW is a recording medium that is writable and deletable. These recording media are compatible with CD-ROMs or audio CDs (CD-DAs). A dedicated device and writing application are necessary for writing to the CD-R or CD-RW, while reading from the CD-R or CD-RW can be performed using a normal CD-ROM drive. The CD-R, CD-RW, CD-ROM and audio CD, and a DVD-ROM, a DVD-R, a DVD-RAM and so on will be collectively referred to as "optical disks".

For writing and reading data relative to such an optical disk, an optical pickup movably mounted in an optical disk drive is used. The optical pickup includes an optical base having a sliding portion that slidably engages with a guide rod provided in the optical disk drive. Various optical components and a laser diode are mounted on the optical base.

There have been developed high-speed optical pickups that enable high-speed recording relative to optical disks. For optical bases of the optical pickups of this type, the following three characteristics are mainly required.

The characteristic first required is being excellent in radiation property. The reason for this is that inasmuch as heat generation of a laser diode upon writing is much greater than that upon reading, unless a sufficient measure for radiation is taken, the life duration or characteristic of the laser diode may be deteriorated. For avoiding the deterioration of the life duration or characteristic of the laser diode, a material of the optical base should be excellent in radiation property so that metal such as zinc or magnesium is more suitable than resin.

The characteristic next required is being as light as possible. The reason for this is that inasmuch as quick movement is required for the high-speed optical pickup, the optical base should be lightweight. If resin, zinc and magnesium are compared in density, zinc is the largest, then resin and magnesium follow in the order named.

The characteristic finally required is being low-priced. When comparing prices, magnesium is the most high-priced, then zinc and resin follow in the order named.

To sum them up, Table 1 is obtained. In Table 1, ⓞ represents "excellent", ○ represents "normal", Δ represents "bad", and X represents "extremely bad".

**Table 1**

| Material | comparison item | | |
|---|---|---|---|
| | radiation | weight | price |
| Resin | X | ○ | ⓞ |
| Zinc | ○ | Δ | ○ |
| Magnesium | ○ | ○ | Δ |

In the conventional high-speed optical pickups, inasmuch as resin can not be used for the optical bases because it is bad in radiation property though low-priced, zinc is used if the price is taken into account, while magnesium is Used if the weight is taken into account. Therefore, either one of the weight and price is sacrificed.

### Summary of the Invention:

It is therefore an object of the present invention to provide an optical pickup having an optical base that is excellent in radiation property, lightweight and low-priced.

Other objects of the present invention will become clear as the description proceeds.

According to an aspect of the present invention, there is provided a n optical pickup mounted movably relative to a mounting object. The optical pickup comprises an optical base, optical components; and, and a laser diode optically connected to said optical components. The optical base comprises a sliding portion slidable relative to said mounting object, a component mounting portion mounted with said optical components, and a laser diode fixing portion fixed with said laser diode. The sliding portion and said component mounting portion are formed by molding resin, and said laser diode fixing portion is formed by an iron plate.

EP-A-1 148 482 discloses the preamble of claim 1.

According to the accompanying drawings: -
Fig. 1 is an explanatory diagram for explaining an outline of an optical pickup according to a preferred embodiment of the present invention;
Fig. 2 is a perspective view seen from above an optical base included in the optical pickup shown in Fig. 1;
Fig. 3 is a perspective view seen from above the optical base of Fig. 2 in the state wherein a laser diode and optical components are mounted on the optical base;
Fig. 4 is a perspective view seen from below the optical base of Fig. 2 in the state wherein the laser diode and the optical components are mounted on the optical base;
Fig. 5 is a perspective view of only the main part showing the state before fixation between the optical base and the laser diode shown in Fig. 3; and
Fig. 6 is a perspective view of only the main part showing the state after fixation between the optical base and the laser diode shown in Fig. 3.

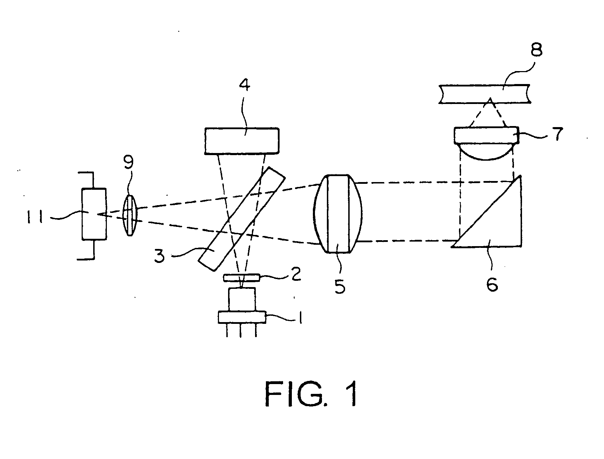

Referring to Fig. 1, description will be given about an outline of an optical pickup according to a preferred embodiment of the present invention.

The shown optical pickup is usable in an optical disk drive that is installed in an electronic device such as a personal computer. The optical pickup uses as a light-emitting element a laser diode 1 being a semiconductor laser that generates a laser beam. The laser beam emitted from the laser diode 1 enters a beam splitter 3 via a diffraction grating 2 and is split by the beam splitter 3, so that a portion of the laser beam enters a monitor 4 having a photodiode. The remaining portion of the laser beam is applied to an optical disk 8 via a collimator lens 5, a raising mirror 6 and an objective lens 7. The monitor 4 detects the intensity of the laser beam. The detected intensity is used for controlling an operation of the laser diode 1. In this manner, data can be recorded on the optical disk 8 using the laser beam emitted from the laser diode 1.

On the other hand, light reflected from the optical disk 8 enters a photodiode 11 as a light-receiving element via the objective lens 7, the raising mirror 6, the collimator lens 5, the beam splitter 3 and a sensor lens 9. In this manner, using the laser beam emitted from the laser diode 1, data recorded on the optical disk 8 can be reproduced based on electrical signals outputted from the photodiode 11.

The beam splitter 3, the monitor 4, the collimator lens 5, the raising mirror 6, the objective lens 7 and the sensor lens 9 arranged on the path of the laser beam will be collectively referred to as "optical components". These optical components along with the laser diode 1 and the photodiode 11 are retained on an optical base serving as a housing of the optical pickup. The raising mirror 6 and the objective lens 7 will be combinedly referred to as a "lens actuator".

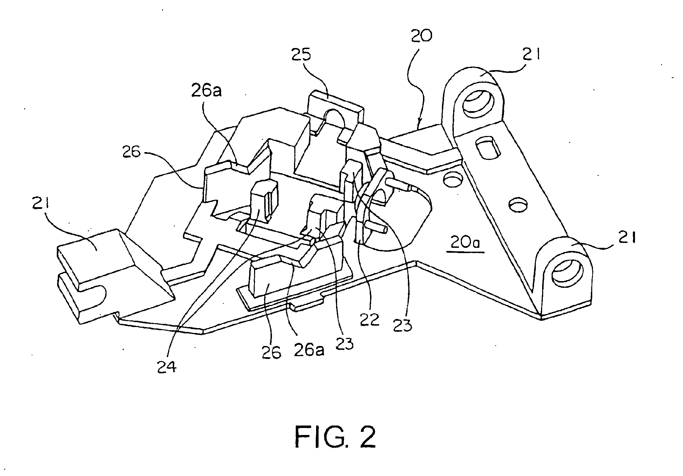

Referring also to Figs. 2 to 4, a concrete structure of the optical pickup shown in Fig. 1 will be described.

The optical base is represented by reference numeral 20 in the figures. The optical base 20 has a sliding portion 21. The sliding portion 21 is slidably mounted on a guide rod (not shown), i.e. a mounting object, of the optical disk drive so that the optical base 20 is movably mounted in the optical disk drive.

As shown in Fig. 2, the optical base 20 comprises a laser diode fixing portion 22 of an arch shape, a diffraction grating mounting portion 23 composed of a pair of pillar-like portions, a collimator lens mounting portion 24 composed of a pair of pillar-like portions, a plate-like photodiode fixing portion 25, and an actuator mounting portion 26 composed of a pair of plate-like portions, all of which are projectingly provided on an upper surface 20a of the optical base 20. One of the pillar-like portions of the diffraction grating mounting portion 23 and one of the pillar-like portions of the collimator lens mounting portion 24 are unified together. Specifically, one pillar-like portion is used for both the diffraction grating mounting portion 23 and the collimator lens mounting portion 24.

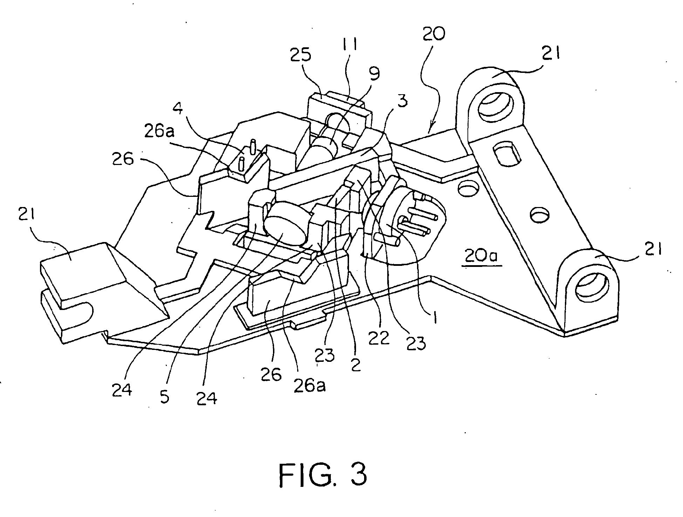

As shown in Fig. 3, the laser diode 1 is brought into contact with the laser diode fixing portion 22 and fixed thereto. The diffraction grating 2 is fixedly retained to the diffraction grating mounting portion 23. The collimator lens 5 is fixedly retained to the collimator lens mounting portion 24. The photodiode 11 is attached to the photodiode fixing portion 25. The foregoing lens actuator is mounted in the actuator mounting portion 26. On a top surface of each plate-like portion of the actuator mounting portion 26 is formed a V-shaped recess 26a for adjusting the tangential skew of the lens actuator. The actuator mounting portion 26 also serves as a portion to fix the beam splitter 3.

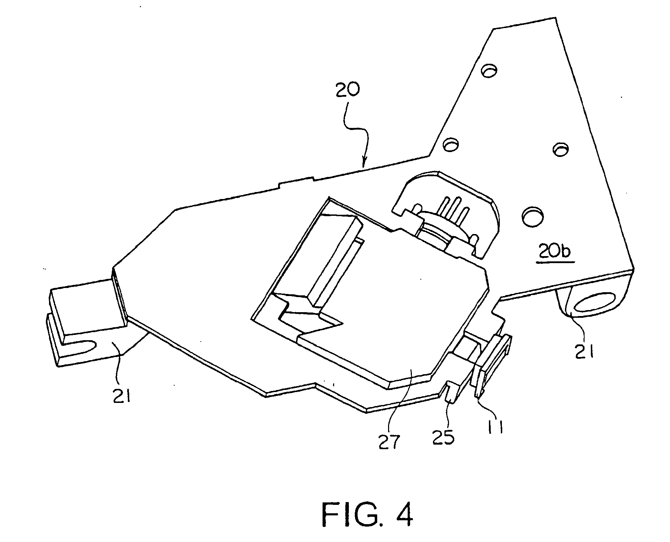

Description will be further given referring also to Fig. 4 showing a lower surface 20b of the optical base 20. The optical base 20 is formed by outsert-molding resin to an iron plate. Specifically, the sliding portion 21 that requires excellent slidability is formed by resin molding of at least one of polypropylene sulfide, polyoxymethyene (polyacetal), and liquid crystal polymer, the laser diode fixing portion 22 and the photodiode fixing portion 25 that require an excellent radiation property are formed by pressing to bend the iron plate, and a component mounting portion 27 that requires a complicated shape is formed by resin molding.

The component mounting portion 27 comprises the foregoing diffraction grating mounting portion 23, collimator lens mounting portion 24 and actuator mounting portion 26 that are formed integral with each other. The sensor lens 9 is fixedly retained to the component mounting portion 27.

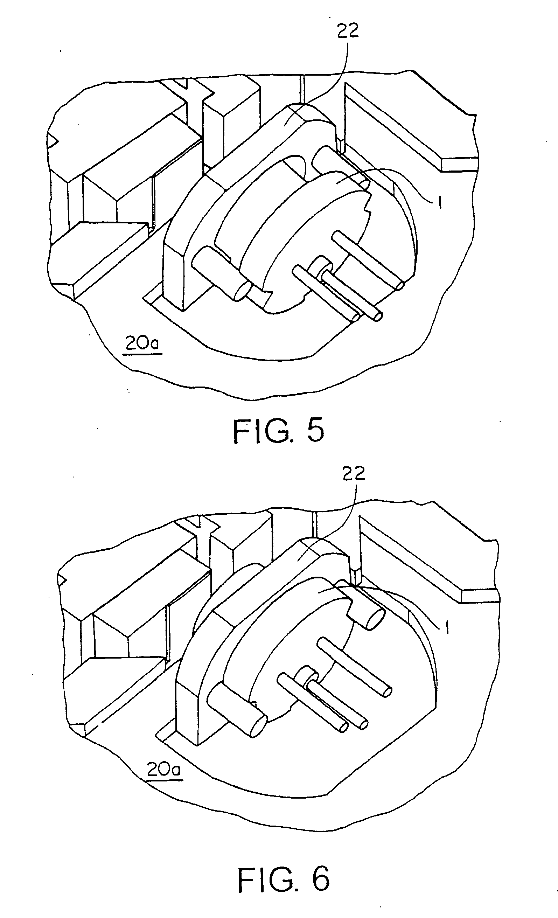

The laser diode 1 is separated from the laser diode fixing portion 22 with a clearance therebetween before mounting as shown in Fig. 5, but is finally brought into contact with the laser diode fixing portion 22 so as to be fixed thereto as shown in Fig. 6. In this manner, the laser diode 1 is in direct contact with the laser diode fixing portion 22 made of part of the iron plate of the optical base 20, and thus heat generated by the laser diode 1 is conducted from a portion of the direct contact over the iron plate, so that the whole of the iron plate serves as a radiation plate. Therefore, the required characteristic can be fully achieved with respect to the heat radiation.

Further, inasmuch as the optical base 20 is formed from the heavy iron plate and the lightweight resin, it is easy to make the optical base 20 lighter than an optical base having the same shape and size and formed only from zinc. Therefore, the required characteristic can also be easily achieved with respect to the weight.

Moreover, when the optical base is formed by the outsert molding as described above, the manufacturing cost can be reduced as compared with a case wherein an optical base is formed by die casting of zinc or magnesium. In addition, by forming the sliding portion 21 from the resin, a sliding member that is required in case of the die-cast metal is not required. Therefore, the total cost can be largely reduced, thereby realizing the optical pickup having the low-priced optical base.

## Claims

1. An optical pickup mounted movably relative to a mounting object, said optical pickup comprising:
an optical base (20) ;
optical components (2-7,9,11), and
a laser diode (1) optically connected to said optical components,
wherein said optical base comprises a sliding portion (21) slidable relative to said mounting object, a component mounting portion (23-26) mounted with said optical components, and a laser diode fixing portion (22) fixed with said laser diode, and
wherein said sliding portion and said component mounting portion are formed by molding resin,
**characterised in that** said laser diode fixing portion is formed by an iron plate.

2. The optical pickup according to claim 1, wherein said resin is outsert-molded to said iron plate.

3. The optical pickup according to claim 1, wherein said laser diode is in direct contact with said laser diode fixing portion.

4. The optical pickup according to claim 1, wherein said optical components include a diffraction grating, a collimator lens, and a lens actuator,
said component mounting portion comprising:
a diffraction grating mounting portion retaining said diffraction grating;
a collimator lens mounting portion retaining said collimator lens; and
an actuator mounting portion mounting said lens actuator thereon.

5. The optical pickup according to claim 4, wherein said lens actuator comprises:
an objective lens; and
a raising mirror interposed optically between said object lens and said collimator lens.

6. The optical pickup according to claim 4, wherein said optical components further including:
a monitor; and
a beam splitter interposed optically between said diffraction grating and each of said monitor and said collimator lens.

7. The optical pickup according to claim 1, further comprising a photodiode optically connected to said optical components, said optical base further comprising a photodiode fixing portion fixed with said photodiode, and said photodiode fixing portion being formed by said iron plate.

8. The optical pickup according to claim 7, wherein said optical components include:
a monitor opposite to said leaser diode;
a diffraction grating placed between said monitor and said leaser diode; a collimator lens opposite to said photodiode;
a sensor lens placed between said collimator lens and said photodiode; and
a beam splitter placed at a position which is between said monitor and said diffraction grating and between said collimator lens and said sensor lens.

9. The optical pickup according to claim 8, wherein said optical components further include:
an objective lens; and
a raising mirror interposed optically between said object lens and said collimator lens.

## Patentansprüche

1. Optisches Abtastgerät, das relativ zu einem Befestigungsobjekt beweglich befestigt ist, wobei das optische Abtastgerät folgendes umfasst:
eine optische Basis (20);
optische Komponenten (2 bis 7, 9, 11); und
eine Laserdiode (1), die optisch mit den optischen Komponenten verbunden ist,
wobei die optische Basis einen Gleitabschnitt (21), der relativ zu dem Befestigungsobjekt beweglich ist, einen Komponentenhalteabschnitt (23 bis 26), an dem die optischen Komponenten montiert sind, und einen Laserdiodenfixierungsabschnitt (22) umfasst, an dem die Laserdiode fixiert ist, und
wobei der Gleitabschnitt und der Komponentenhalteabschnitt durch Formgeben von Kunstharz gebildet werden,
**dadurch gekennzeichnet, dass** der Laserdiodenfixierungsabschnitt durch eine Eisenplatte gebildet wird.

2. Optisches Abtastgerät nach Anspruch 1, wobei das Kunstharz auf die Eisenplatte aufgeformt ist.

3. Optisches Abtastgerät nach Anspruch 1, wobei die Laserdiode in direktem Kontakt zu dem Laserdiodenfixierungsabschnitt steht.

4. Optisches Abtastgerät nach Anspruch 1, wobei die optischen Komponenten ein Beugungsgitter, eine Kollimatorlinse und ein Linsenstellglied beinhalten, wobei der Komponentenhalteabschnitt folgendes umfasst:
einen Beugungsgitterhalteabschnitt, der das Beugungsgitter festhält;
einen Kollimatorlinsenhalteabschnitt, der die Kollimatorlinse festhält; und
einen Stellgliedhalteabschnitt, an dem das Linsenstellglied montiert ist.

5. Optisches Abtastgerät nach Anspruch 4, wobei das Linsenstellglied folgendes umfasst:
eine Objektivlinse; und
einen Aufrichtspiegel, der optisch zwischen der Objektivlinse und der Kollimatorlinse eingefügt ist.

6. Optisches Abtastgerät nach Anspruch 4, wobei die optischen Komponenten darüber hinaus folgendes umfassen:
ein Überwachungsgerät; und
einen Strahlteiler, der optisch zwischen dem Beugungsgitter und jeweils dem Überwachungsgerät und der Kollimatorlinse eingefügt ist.

7. Optisches Abtastgerät nach Anspruch 1, das darüber hinaus eine Photodiode umfasst, die optisch mit den optischen Komponenten verbunden ist, wobei die optische Basis darüber hinaus einen Photodiodenfixierungsabschnitt umfasst, auf dem die Photodiode fixiert ist, und der Photodiodenfixierungsabschnitt durch die Eisenplatte gebildet wird.

8. Optisches Abtastgerät nach Anspruch 7, wobei die optischen Komponenten folgendes umfassen:
ein Überwachungsgerät gegenüber der Laserdiode;
ein Beugungsgitter, das zwischen dem Überwachungsgerät und der Laserdiode platziert ist;
eine Kollimatorlinse gegenüber der Photodiode;
eine Sensorlinse, die zwischen der Kollimatorlinse und der Photodiode platziert ist; und
einen Strahlteiler, der an einer Position platziert ist, die sich zwischen dem Überwachungsgerät und dem Beugungsgitter und zwischen der Kollimatorlinse und der Sensorlinse befindet.

9. Optisches Abtastgerät nach Anspruch 8, wobei die optischen Komponenten darüber hinaus folgendes umfassen:
eine Objektivlinse; und
einen Aufrichtspiegel, der optisch zwischen der Objektivlinse und der Kollimatorlinse eingefügt ist.

## Revendications

1. Tête de lecture optique montée avec possibilité de mouvement par rapport à un objet de montage, ladite tête de lecture optique comprenant :
une base optique (20),
des composants optiques (2-7, 9, 11), et
une diode laser (1) reliée optiquement aux dits composants optiques,
dans laquelle ladite base optique comprend une partie coulissante (21) pouvant coulisser par rapport audit objet de montage, une partie (23-26) de montage des composants équipée avec lesdits composants optiques, et une partie (22) de fixation de la diode laser à laquelle est attachée ladite diode laser ; et
dans laquelle ladite partie coulissante et ladite partie de montage des composants sont constituées d'une résine de moulage,
**caractérisée en ce que** ladite partie de fixation de la diode laser est constituée par une plaque métallique.

2. Tête de lecture optique selon la revendication 1, dans laquelle ladite résine est moulée par l'extérieur à ladite plaque métallique.

3. Tête de lecture optique selon la revendication 1, dans laquelle ladite diode laser est en contact direct avec ladite partie de fixation de la diode laser.

4. Tête de lecture optique selon la revendication 1, dans laquelle lesdits composants optiques comprennent un réseau de diffraction, une lentille de collimateur, et un actionneur de lentille,
ladite partie de montage des composants comprenant :
une partie de montage du réseau de diffraction maintenant ledit réseau de diffraction ;
une partie de montage de la lentille de collimateur maintenant ladite lentille de collimateur ; et
une partie de montage de l'actionneur de lentille pour y monter ledit actionneur de lentille.

5. Tête de lecture optique selon la revendication 4, dans laquelle ledit actionneur de lentille comprend :
une lentille d'objectif ; et
un miroir montant interposé optiquement entre ladite lentille d'objectif et ladite lentille de collimateur.

6. Tête de lecture optique selon la revendication 4, dans laquelle lesdits composants optiques comprennent en outre :
un moniteur ; et
un séparateur de faisceau interposé optiquement entre ledit réseau de diffraction et chacun dudit moniteur et de ladite lentille de collimateur.

7. Tête de lecture optique selon la revendication 1, comprenant en outre une photodiode reliée optiquement aux dits composants optiques, ladite base optique comprenant en outre une partie de fixation de la photodiode à laquelle est attachée ladite photodiode, et ladite partie de fixation de la photodiode étant constituée par ladite plaque métallique.

8. Tête de lecture optique selon la revendication 7, dans laquelle lesdits composants optiques comprennent ;
un moniteur opposé à ladite diode laser ;
un réseau de diffraction placé entre ledit moniteur et ladite diode laser ;
une lentille de collimateur opposée à ladite photodiode ;
une lentille de capteur placée entre ladite lentille de collimateur et ladite photodiode ; et
un séparateur de faisceau placé à une position qui se situe entre ledit moniteur et ledit réseau de diffraction et entre ladite lentille de collimateur et ladite lentille de capteur.

9. Tête de lecture optique selon la revendication 8, dans laquelle lesdits composants optiques comprennent en outre :
une lentille d'objectif ; et
un miroir montant interposé optiquement entre ladite lentille d'objectif et ladite lentille de collimateur.
